# EUROPEAN PATENT APPLICATION

(11) **EP 2 084 956 A1**
(43) Date of publication of application: **05.08.2009**
(21) Application number: 09151626.0
(22) Date of filing: 29.01.2009
(51) Int. Cl.: A01G 9/02, B65F 1/14

(54) **Wheeled plant container**

(30) Priority: 29.01.2008 NL 2001232
(71) Applicant: Boomkwekerij van der Starre B.V., 2771 NM Boskoop (NL)
(72) Inventor: van der Starre, Huibert, 2742 KV, Waddinxveen (NL)
(74) Representative: Ketelaars, Maarten F.J.M.

(57) **Abstract**

Plant container comprising a pot, preferably a pot with an underside which has an elliptical cross section and a top side which has a rectangular cross section. It is proposed to provide relatively large pots in particular with wheels in order to be able to move them in a simple manner. High loads occur at the location of the wheels and the plastic materials used have to satisfy high demands. In addition, it is not necessary to provide all pots with such wheels. Therefore, it is proposed to design the wheels as being separate from the pot. In the present proposal, the wheels are attached to a wheel support, which wheel support can move in a slot which is provided in the pot to this end. The slot extends vertically, that is to say when a load is exerted the wheels are pushed further into the slot in the operating position thereof. As a result thereof, it is not necessary to provide complicated fastening means and it is possible to remove the wheels in a simple manner after use, if desired.

Instead of being embodied as wheels, the support can also be embodied as a stabilizing support.

## Description

The present invention relates to a plant container combination according to the preamble of Claim 1.

From the prior art, such as US 2006/0248797 and US 1498646, wheeled plant containers are known on which a wheel is attached near the bottom at one end. In US 2006/0248797, two wheels which are arranged at a distance from one another are provided with a shaft which connects the latter and extends through the bottom of the plant container. In US 1498646, the wheels are attached to wheel supports which are fastened to the lower peripheral edge by means of rivets.

The larger the dimensions of the plant container, the greater the need for it to be mobile. The mobility requirement may relate to the home of a consumer as well as to nurseries, shops and other points of sale. The prior art structures use a drastically altered plant container for accommodating the wheels. In this case, it is necessary to provide reinforcements in the container in order to be able to transmit the forces acting on the wheels without damaging the pot. It will be understood that pots of this type, particularly if they are filled with moist soil, may be heavy, as a result of which a considerable moment is exerted on the container wall at the location of the wheels.

However, wheels are not desirable for all relatively large pots. Moreover, in some cases wheels are only required temporarily. This is the case, for example, in sales rooms where wheels are necessary for manoeuvring the respective plant containers into the desired position, but once the sale has taken place, these wheels are no longer required and are considered unattractive. The wheels are not desirable either in an environment with soil and in situations involving displacement on conveyor belts.

It is an object of the present invention to eliminate the drawbacks of the prior art.

This object is achieved by a plant container combination which has the features described in Claim 1. The support is a wheel support wherein a wheel is accommodated so as to be able to rotate. According to this embodiment of the present invention, the wheel supports supporting the wheels are attached to the plant container in such a manner that they can be coupled to and preferably uncoupled from the plant container. As a result, it is possible to produce the wheel supports from a plastic material which is different from and/or thicker than that of the plant pot. Via the wheel supports, the forces acting on the wheels can be transmitted to the plant container across a larger surface area, as a result of which the plant container can be made from a relatively thin material. Using the construction according to the invention, it is possible to provide a plant container with or without wheels and/or to remove any wheels which are present thereon.

The above measures result in significant savings and, in addition, make it possible to incorporate plant containers with wheels into a plant container line, that is to say a group of products having essentially the same shape but different dimensions.

According to an advantageous embodiment of the invention, the second coupling means, that is to say the coupling means which are arranged on the plant container comprise a slot and the first coupling means, that is to say the parts arranged on the wheel support, comprise a projection which can be accommodated in said slot. By simply pushing the projection on the wheel support into the slot, the plant container and wheel support can be coupled to one another.

In principle, any desired number of wheels may be present. The minimum number is one single wheel (roller). Preferably, however, two wheels which are at a distance from one another are used. More particularly, each wheel is provided with its own wheel support so that an independent unit consisting of a wheel/wheel support can be used. As a result thereof, a single combination of a wheel/wheel support is sufficient to insert a wheel at different locations in a pot.

According to a particular embodiment of the invention, the abovementioned slot for receiving the wheel support extends substantially vertically in the position of use of the plant container. The expression "position of use of the plant container" is to be understood as meaning the normal growing position of the plant arranged in the plant container and the intended transport position. Due to the fact that the slot extends vertically, the wheel support is pushed into the slot when a load is exerted on the wheel and the forces are transmitted to the plant container in an evenly distributed manner when the plant container is tilted.

More particularly, the slot extends up to the bottom of the plant container and has an introduction opening for the first coupling means of the slot. This means that the wheel support is introduced into the slot from below, thus making further locking unnecessary, since the pot will, during normal use, either rest on the bottom, as a result of which the wheel support cannot move out of the slot, or be transported by means of the wheels, as a result of which an upward force is exerted by the wheel support in the slot. The fit between the wheel support and the slot is such that the wheel support does not move out of the slot when the plant container is lifted up.

According to a further advantageous embodiment of the invention, when the wheel support is fully in position with respect to the pot, a small distance (of a few millimetres) is present between the underside of the respective wheel and the bottom of the pot. Thus, it is ensured that the plant container rests on the intended edge thereof.

It is possible to provide slots for accommodating the wheels at various locations on the pot. This makes it possible to arrange the wheels as desired on, for example, the lefthand side or the right-hand side of the pot.

According to a further advantageous embodiment of the invention, the plant container comprises a pot having a substantially rectangular top and an elliptical underside. The side wall extending in between these two shapes gradually tapers. With a variant of this kind, the wheel is or the wheels are preferably arranged on the long side of the pot.

As has been indicated above, it is also possible to couple first coupling means of a stabilizing support to the second coupling means. This makes it possible to ensure stable positioning of a plant container during storage, transport or otherwise, as a result of which the plant container can be prevented from, for example, blowing over or falling over.

The invention also relates to an assembly comprising the above-described plant container and a carrying support. Such a carrying support engages with the wall of the pot in any suitable way and may engage internally as well as externally. The purpose of the carrying support is to enable transportation of the plant container. By means of such a carrying support, the plant container can be tilted from the stable starting position, upon which the wheels become operational and transportation can take place. Such carrying support may also be embodied to be provided with a label containing information. Preferably, the carrying support is arranged on the plant container on the same side as that on which the wheel or the wheels is/are arranged.

The invention will be described below with reference to an exemplary embodiment, in which:
Fig. 1 shows a diagrammatic perspective view of the assembly according to the invention;
Fig. 2 shows the assembly from Fig. 1 rotated through a quarter turn and in detail;
Fig. 3 shows a partial bottom/side view of the assembly according to the invention;
Fig. 4 shows a cross section along line IV-IV in Fig. 3;
Figs. 5a and 5b diagrammatically show the use of a stabilizing support.

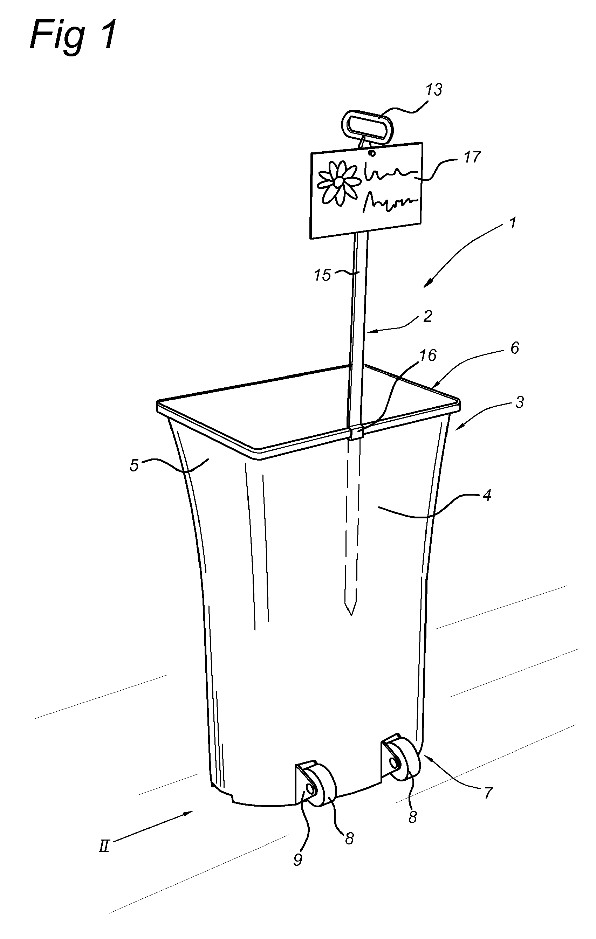

In Fig. 1, the assembly according to the invention is denoted overall by reference numeral 1. It comprises a plant container 3 and a carrying support 2 cooperating with the former. Carrying support 2 is provided with a handle 13 which is fitted to the end of a stick 15. Stick 15 is provided with a hook 16 which grips behind the peripheral edge of the plant container 3. A label 17 is attached to the stick 15 in any suitable way according to the prior art. An example of such an attachment can be found in Dutch patent 2,000,474. The plant container 3 has a rectangular upper side 6 and an elliptical bottom 7, between which side walls extend, such as long side walls 4 and short side walls 5.

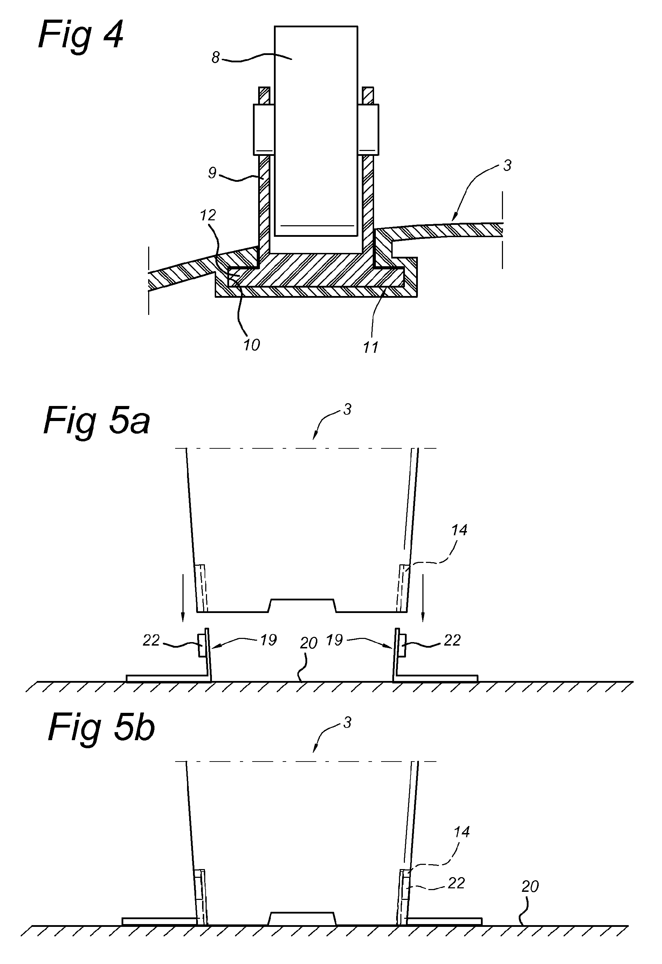

Near the bottom, on the long side wall 4, wheels 8 are present. Each wheel is accommodated in a wheel support 9 which is fitted in a slot 10 (Fig. 4).

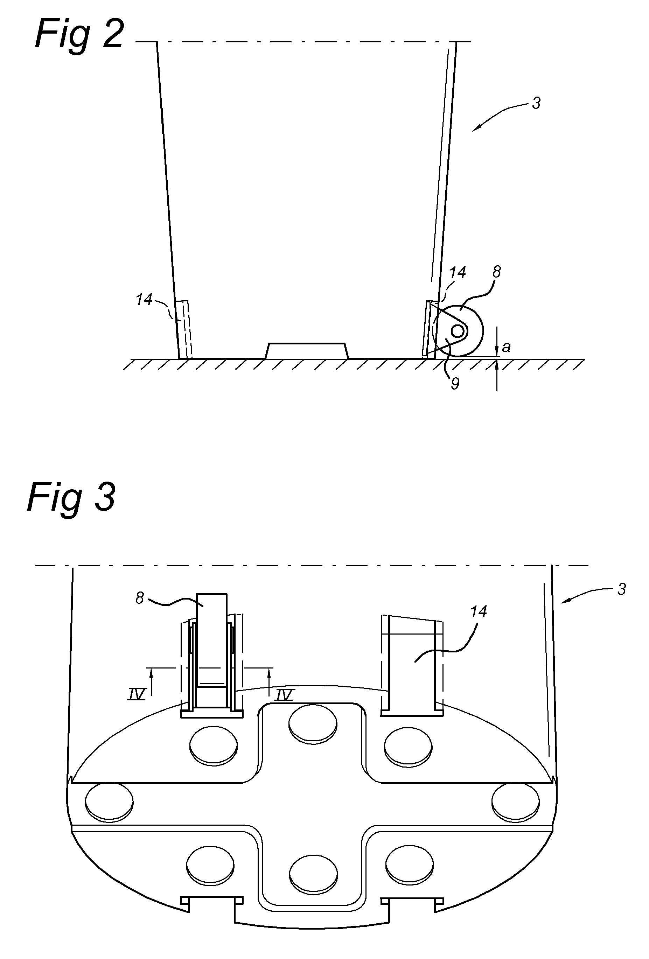

Details of this attachment arrangement can be seen in Fig. 4, which shows that the wheel support 9 in which the wheel 8 is accommodated so as to be able to rotate has a wider part 12 which is designed to be accommodated in a wider part 11 of slot 10. As Fig. 3 shows, the slot 10 of the plant container is open towards the bottom 7 and this opening is denoted by reference numeral 14. It is only via this opening that the wheel support 9 can be introduced and, if desired, removed. If the wheel support is displaced upwards in the vertical direction as far as possible in slot 10, the wheel 8 will be situated at a small distance of a few millimetres from the bottom, as is indicated by distance a in Fig. 2.

Using the above-described construction, it is possible, if desired, to provide wheel supports with wheels on a plant container without altering any other functionality. In addition, it is possible to remove such wheels after use in a simple manner by sliding them off. By locking the wheel supports in the slots in the vertical direction, the wheel support is locked with respect to the plant container in a simple manner when a load is placed on the latter, that is to say during transportation. Moreover, due to the shape of the wheel support, the force is distributed over a relatively large surface area of the container, which makes it possible to produce the container from a relatively thin material (injection-moulding). Because of the high mechanical demands which the wheel support itself has to satisfy, the latter can either be made from a relatively thick material or be made from another material which may, for example, be plastic, metal or the like. There are also numerous possibilities with regard to the embodiment of the wheels.

The invention is used in particular with pots which have a relatively large volume, that is to say with a volume of 7.5 litres or above. There is in principle no restriction with regard to the maximum size.

According to the present invention, it is possible, on the one hand, to line up a row of pots which have different volumes, but substantially the same shape and use a universal wheel support/wheel combination to make it possible to wheel such pots, if desired. As a result thereof, it is, on the one hand, possible to achieve a considerable cost saving by using a single wheel/wheel support for all types of pots and, in addition, each of the pots can be of a more lightweight design, as a large proportion of the load is absorbed by the wheel support.

Figs. 5a and 5b show a further variant of the invention in which there is a surface 20 which is provided with stabilizing supports 19 which are fixedly attached thereto and protrude therefrom. These stabilizing supports 19 are provided with first coupling means 22 which correspond to the above-described construction having a wider part 12 and which are embodied to be accommodated in the slot 10 of the plant container. The surface 20 may be a stationary or movable supporting surface. By means thereof, the pot can be prevented from blowing over, falling over or performing any other undesirable movement. In addition, it is also possible to secure a series of pots in a fixed position with respect to one another.

The above only illustrates an exemplary embodiment of the invention and it will be understood that the construction can be used with any other model of plant container which may or may not be provided with a supporting member. These and further variants will be immediately obvious to those skilled in the art upon reading the above description and are covered by the scope of the attached claims.

## Claims

1. Plant container combination comprising a plant container (3) having a side wall (4, 5) and a bottom (7), as well as a wheel support (9,19) which is to be connected to the side wall/bottom, in which said wheel support is provided with first coupling means (12,22) and said plant container is provided with second coupling means (10), which second coupling means cooperate with said first coupling means, **characterized in that** one of said coupling means (12, 22; 10) comprises a slot (20) and another one of said coupling means (10; 12, 22) comprises a projection (12) which cooperates with said slot.

2. Combination according to Claim 1, in which said second coupling means comprise said slot (10) and said first coupling means comprise a projection (12) which is provided on the wheel support and is to be accommodated in said slot.

3. Combination according to one of the preceding claims, comprising two wheels which are at a distance from one another.

4. Combination according to Claim 2, in which each wheel (8) comprises it own wheel support (9) which is independent of the wheel support of said other wheel.

5. Combination according to one of the preceding claims, in which said slot (10) extends substantially vertically in the position of use of said plant container.

6. Combination according to Claim 5, in which the embodiment of the first and second coupling means is such that when the bottom of said container is situated on a flat surface, said wheel (8) is situated at a distance (a) from said surface.

7. Combination according to one of the preceding claims in combination with Claim 2, in which said slot comprises an introduction opening (14) for said first coupling means, which introduction opening is provided in the bottom (7) of said plant container.

8. Combination according to one of the preceding claims, comprising a pot which has a substantially elliptical cross section at the bottom and a substantially rectangular cross section at the upper side (6).

9. Combination according to Claim 8, in which said wheel is arranged on the long side (4) of said pot.

10. Combination according to one of the preceding claims, in which said support comprises a stabilizing support (19).

11. Assembly comprising a plant container according to one of the preceding claims as well as a carrying support (2) cooperating with the former.

12. Assembly according to Claim 11, with a plant container according to Claim 9, in which said carrying support is arranged on said long side (4) of said pot.
